(19) **Europäisches Patentamt / European Patent Office / Office européen des brevets**

(11) **EP 1 998 081 A2**

(12) **EUROPEAN PATENT APPLICATION**

(43) Date of publication:
**03.12.2008 Bulletin 2008/49**

(51) Int Cl.:
**F16H 59/68** *(2006.01)* **F16H 61/32** *(2006.01)*
**F16H 63/30** *(2006.01)*

(21) Application number: **08009806.4**

(22) Date of filing: **29.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.05.2007 JP 2007145831**

(71) Applicant: **Hitachi Ltd.**
**Chiyoda-ku**
**Tokyo 100-8280 (JP)**

(72) Inventors:
• **Saito, Masashi**
**Tokyo 100-8220 (JP)**

• **Yamada, Shigeki**
**Tokyo 100-8220 (JP)**
• **Kameshiro, Yasuro**
**Tokyo 100-8220 (JP)**
• **Kume, Mikine**
**Tokyo 100-8220 (JP)**
• **Nakano, Youichi**
**Tokyo 100-8220 (JP)**

(74) Representative: **Beetz & Partner**
**Patentanwälte**
**Steinsdorfstrasse 10**
**80538 München (DE)**

(54) **Machine and electricity integration type shift controller**

(57) The present invention relates to a shift controller provided for suppressing the movement of a gear in the axial direction and calculating the angle of the gear with high precision. A controller for switching the driving status of a car comprising a motor 22 for driving a shift rail 13 of a transfer case 4, a gear mechanism for transferring the rotation of the motor to the shift rail 13, a magnet 32 rotating together with the shift rail 13, and a magnetic sensor element 58 for proving output according to the rotational angle of the magnet 32, wherein the distance between the magnet 32 and the magnetic sensor element 58 is longer than the position variance of the magnetic sensor 58.

FIG. 3A

EP 1 998 081 A2

**Description**

FIELD OF THE INVENTION

The present invention relates to a shift controller in a wide meaning for switching two-wheel drive or four-wheel drive of a car or switching the transfer path of the driving force such as a transmission and more particularly to a shift controller operated by an electric actuator. Further, the present invention can be used for a motor-drive control module similar to it. Furthermore, the present invention relates to an art of a rotational position sensor used by such as a switching device.

BACKGROUND OF THE INVENTION

As a prior art, for example, the shift controller described in Patent Document 1 is disclosed to have a circular plate in which the output shaft is fixed to an output shaft received in an end hand-reeling hole. Further, the output shaft passes through the circular plate and in the circular plate, a magnet pattern for generating a Gray code is formed. Further, in a region where a coded signal does not provide signal information, it is necessary to use a second sensor.

In the shift controller described in Patent Document 2, as shown in Fig. 4, at the center of the warm wheel, the magnet in the same size as that of the sensor element is positioned and on the warm wheel side of the circuit substrate, the GMR sensor is arranged. Further, the mechanism for suppressing the movement of the warm wheel in the axial direction is not described.

In the shift controller described in Patent Document 3, the magnet member is attached to the gear, and the magnet member has a cylindrical magnet, and the movement of the gear in the axial direction is mechanized so as to be suppressed by the bearing O-ring.

In the shift controller described in Patent Document 4, the magnet holder having a columnar magnet is joined to the fourth gear. However, the mechanism for suppressing the movement of the fourth gear in the axial direction is not described.

In the shift controller described in Patent Document 5, the magnet holder having a columnar magnet is joined to the fourth gear. However, the mechanism for suppressing the movement of the fourth gear in the axial direction is not described.

The shift controller described in Patent Document 6 has a structure that the magnet member is attached to the gear and the magnet member has a cylindrical magnet. However, the mechanism for suppressing the movement of the gear in the axial direction is not described.

Patent Document 1: Japanese Patent Laid-open No. 2001-159463
Patent Document 2: Japanese Patent Laid-open Announcement No. 2003-525563
Patent Document 3: WO 2004-068679
Patent Document 4: Patent 3799270
Patent Document 5: Japanese Patent Laid-open No. 2006-030217
Patent Document 6: Japanese Patent Laid-open No. 2004-245614

SUMMARY OF THE INVENTION

In the shift controller, a concrete method for suppressing the movement of the gear in the axial direction, a method for calculating the angle of the gear with high precision, and improvement of the environmental adaptability of the shift controller are desired. Furthermore, a shift controller, even if it fails, capable of returning to the operation immediately before the failure is desired.

To solve the above problems, the controller of the present invention for switching the driving status of a car includes a motor for driving a shift rail of a transfer case, a gear mechanism for transferring the transfer case, a gear mechanism for transferring the rotation of the motor to the shift rail, a magnet rotating together with the shift rail, and/or a magnetic sensor element for proving output according to the rotational angle of the magnet, wherein the distance between the magnet and the magnetic sensor element is longer than the position variance of the magnetic sensor.

Furthermore, the controller of the present invention for switching the driving status of a car is structured so that the distance between the magnet and the magnetic sensor element is smaller than the diameter of the magnet.

Furthermore, the controller of the present invention for switching the driving status of a car is structured so as to receive the movement of the gear mechanism in the axial direction by the outside of the magnet.

Further, the controller of the present invention for switching the driving status of a car includes a motor for driving a shift rail of a transfer case, a gear mechanism for transferring the rotation of the motor to the shift rail, a magnet for rotating together with the shift rail, a magnetic sensor element for proving output according to the rotational angle of the magnet, and/or a signal processing mechanism for detecting the rotational angle of the shift rail from the output of the magnetic sensor element, wherein for the signal processing function, a ratio metric method for obtaining a ratio from a sensor signal obtained by normalizing a signal from the magnetic sensor element is used.

Furthermore, the controller of the present invention for switching the driving status of a car is structured so that function information for expressing the aforementioned ratio is stored in the nonvolatile memory.

Furthermore, the controller of the present invention for switching the driving status of a car has a waterproof circuit storage unit for controlling the aforementioned motor and is structured so as to control the thickness of an adhesive for sealing the circuit storage unit by a bush.

Furthermore, the controller of the present invention for switching the driving status of a car is structured so that the bush is integrated with the circuit storage unit.

Furthermore, the controller of the present invention for switching the driving status of a car is structured so that the circuit having the signal processing function aforementioned can perform the return operation at time of failure.

Furthermore, the controller of the present invention for switching the driving status of a car is structured so as to realize the return operation aforementioned by updating the data of the nonvolatile memory.

Furthermore, the controller of the present invention for switching the driving status of a car is structured so that the return operation is executed at the known position of the motor.

BRIEF DESCRIPTION OF THE DRAWINGS

Fig. 1 is a drawing showing a driving train of a four-wheel driving car,
Fig. 2 is an external view of the machine and electricity integration type shift controller,
Fig. 3A is an exploded perspective view of the machine and electricity integration type shift controller,
Fig. 3B is an exploded perspective view of the machine and electricity integration type shift controller,
Fig. 4 is a fastening diagram of the ECU storage section and gear storage section,
Fig. 5 is a drawing showing the movement of the output shaft in the axial direction,
Fig. 6 is a drawing showing the movement of the output shaft in the axial direction,
Fig. 7 is an external view of the substrate base,
Fig. 8 is a cross sectional view of the ECU storage section,
Fig. 9 is an enlarged cross sectional view of the ECU storage section,
Fig. 10 is a cross sectional view of the output shaft and magnet holder,
Fig. 11 is a detailed diagram of the yoke,
Fig. 12 is an external view of the magnetic holder,
Fig. 13 is an external view of the output shaft,
Fig. 14 is a drawing showing the movement of the magnetic holder,
Fig. 15 is an output waveform of the sensor,
Fig. 16 is an output waveform of the sensor,
Fig. 17 is an enlarged view of the output waveform of the sensor,
Fig. 18 is a drawing showing the shift of the sensor and angle deviation,
Fig. 19 is a drawing showing the inside of the ECU,
Fig. 20 is an enlarged view of the inside of the ECU,
Fig. 21 is a drawing showing the terminal arrangement of the connector,
Fig. 22 is an assembly drawing of the shift controller,
Fig. 23 is a block diagram of the control system,
Fig. 24 is a drawing showing the return at time of failure, and
Fig. 25 is a drawing showing a fail safe operation at time of failure.

DESCRIPTION OF THE PREFERRED EMBODIMENTS

The embodiments of the present invention will be explained below with reference to the accompanying drawings.

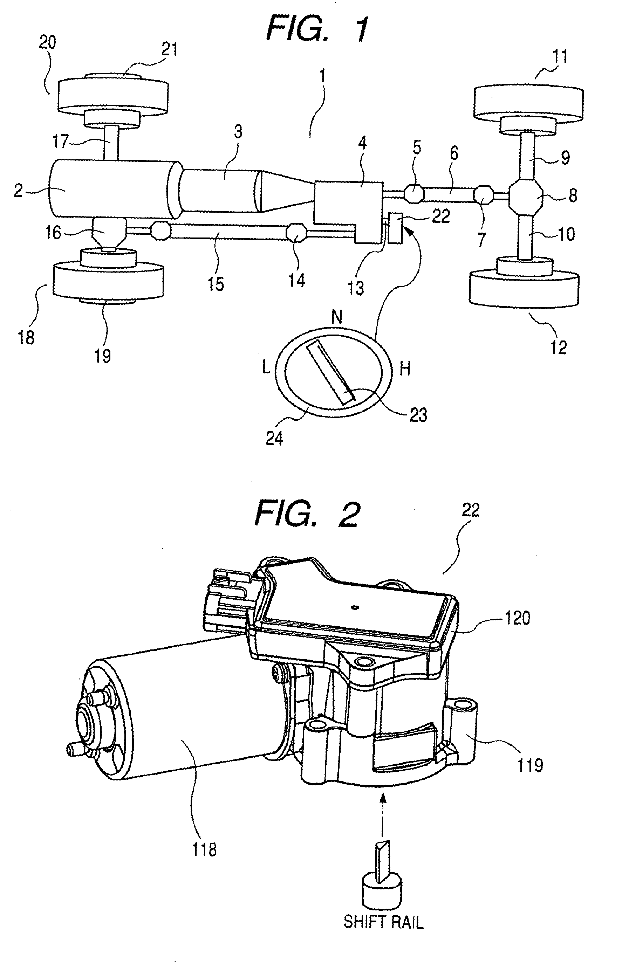

Fig. 1 shows schematically the driving train of a four-wheel driving car. A driving train 1 of the four-wheel driving car is connected to a drive, that is, a transmission 3 and has a motor 22 for directly driving the transmission. The transmission 3 may be either of the automatic type and manual type. The output of the transmission 3 directly drives a transfer case assembly 4 and the concerned transfer case assembly member 4 provides driving force to the post driving line including a post propulsion shaft 6, a post differential device 8, a pair of active axels, that is, post axels 9 and 10, and a pair of post tire and wheel assemblies 11 and 12.

Further, the transfer case assembly 4 includes a secondary, that is, front propulsion shaft 15, a secondary, that is, front differential device assembly 16, a pair of secondary active wheels, that is, front wheels 16 and 17, and a pair of secondary, that is, front tire and wheel assemblies 18 and 20. The transfer case assembly 4 selectively provides driving force to the secondary, that is, front driving line. Both the main driving line 6 and secondary driving line 15 can have universal couplings arranged properly and appropriately. The concerned couplings allow static and dynamic shifts and inconsistency between various shafts and components.

An assembly 24 shown in Fig. 1 is arranged within a range accessible by a driver of a car and has a switch 23 for selecting one of a plurality of operation modes of the transfer case assembly 4. In place of the assembly shown in Fig. 1, a form of a control panel may be used.

The shift controller 22 is installed accompanying the transfer case assembly 4. The shift controller 22 is a machine and electricity integration type controller bearing the control for the transfer case assembly 4, having an output shaft 40 with a hand-reeling hole formed, and is connected to a shift rail 13 of the transfer case assembly 4 via the output shaft.

The shift controller 22 has a function for inputting an output signal of the mode change-over switch 23 and car speed information, engine speed information, and throttle position information from the engine control unit and permitting the output shaft to follow the target rotational angle.

Fig. 2 is an external view of the machine and electricity integration type shift controller 22 showing the characteristic of the present invention. A motor storage section 118, a gear storage section 119, and an ECU storage section 120 are electrically and physically joined respectively with a rigid body. The respective connection portions are sealed so as to prevent externally entering of water, salt water, and others.

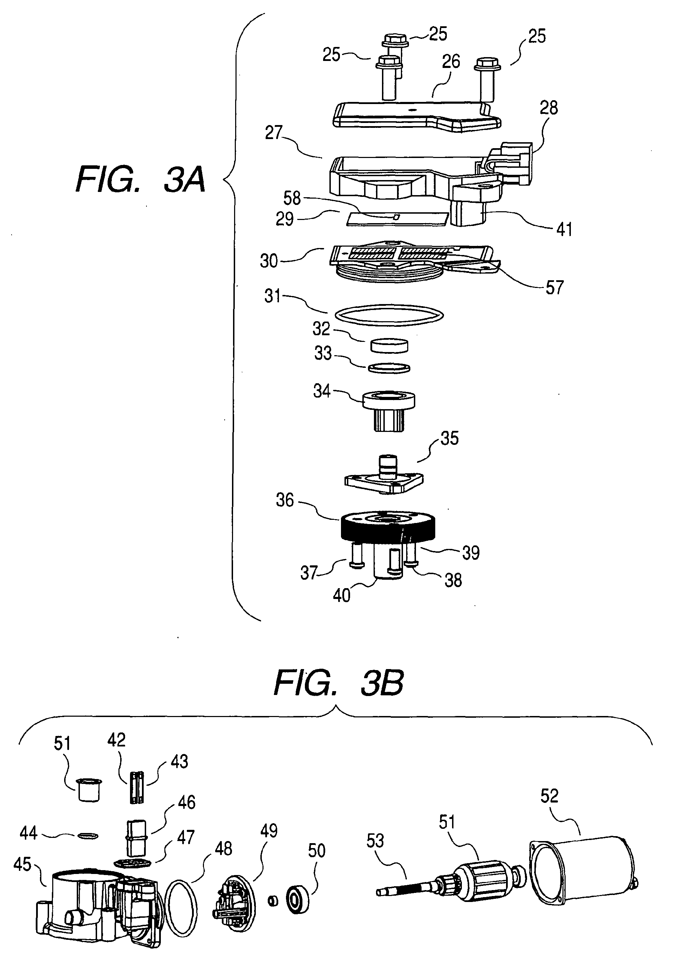

Figs. 3A and 3B are an exploded perspective view of the machine and electricity integration type shift controller 22 showing the characteristic of the present invention. A circuit substrate 29 is fixed to an aluminum base 30 with an adhesive 57 (the hatched part on the aluminum base shown in Fig. 3A). The circuit substrate 29 may be supposed to be a ceramic substrate with aluminum purity of about 96% or a glass epoxy substrate. For selection of the circuit substrate 29, heat resistance must be considered, though in the case of the machine and electricity integration type shift controller, the heat source is the temperature of oil inside the transfer case rising in correspondence to the car speed and the self heat generation of the heating part mounted on the circuit substrate. When a glass epoxy type circuit substrate is selected, the glass transition temperature of the substrate and the aforementioned temperature are considered and the substrate classification is decided. In this embodiment, a ceramic substrate having better heat conduction is adopted.

The adhesive 57 for fixing the circuit substrate 29 to the substrate base 30 is preferably an article of good thermal conductivity. In this embodiment, a silicon adhesive of thermal conductivity of 2 W/m·k or higher is used. In this embodiment, the circuit substrate 29 uses a ceramic material (a coefficient of linear expansion of 6 to 8 x $10^{-6}$), and the substrate base 30 uses an aluminum material (a coefficient of linear expansion of 20 to 30 $\times$ $10^{-6}$), and to absorb the heat variation due to the difference of coefficient of linear expansion between the concerned materials, a comparatively soft silicon adhesive is adopted. When the coefficient of linear expansion of the circuit substrate is close to that of the circuit base, an epoxy series adhesive may be substituted. Further, the concerned adhesive is positioned on a sensor element 58 and a magnet 32, so that it is desirably a non-magnetic material.

To the substrate base 30, a substrate case 27 with a connector 28 integrated is joined additionally. In this embodiment, a silicon series adhesive is used, though it may be joined to keep the waterproofness between the substrate base 30 and the substrate case 27 and the joint may be sealed by a rubber packing and screwing.

On the substrate case 27, a cover 26 is adhered from above. Similarly to the adhesion with the substrate base, the sealing structure is required, though in this embodiment, both the substrate case and cover use a material of PBT (including glass fiber of 40%), so that the difference in the coefficient of linear expansion is small, thus an epoxy series adhesive is used. At the end of the convex edge on the lower part of the substrate base 30, an O-ring 31 is fit externally. The O-ring 31 is used to seal the substrate base 30 and gear body 45 and uses a material of fluorine rubber in consideration of the environmental adaptability.

On the substrate case 27, a connector 41 for connecting a motor is also integrated and via relaying terminals 42 and 43 having ends with female terminals formed, a motor brush holder 49 and the substrate case 27 are connected electrically. When assembling the shift controller, the relaying terminals 42 and 43 are inserted into the gear body 45, though aiming at prevention of short-circuits of the insertion guide and mutual relaying terminals, a relaying terminal holder 46 is used. The relaying terminal holder 46 is internally divided into two chambers and is structured so as to prevent the relaying terminals 42 and 43 from mutual contact.

The outer periphery of the motor-connection connector 41 is sealed by arranging seal rubber 47 between the outer periphery and the gear body. The mounting portion (seal surface) between the O-ring 31 and the seal rubber 47 is controlled to surface roughness of 5 μm or less by machining.

The motor brush holder 49 is attached with a brush and is structured so as to supply power to a commutator 51.

On the output shaft 40, a wheel gear 36 is formed and is structured so as to transfer the rotary motion of the motor to the shift rail of the transfer case 4 via a worm gear 53 formed on the motor shaft.

The rotation of the output shaft 40 causes a rotation of the magnet 32 and gives a change in the magnetic field to the sensor element 58 on the circuit substrate 29. To the magnet 32, to increase the magnetic force at the position of the sensor element 58, a metallic yoke 33 is adhered. The magnet 32 adhered to the metallic yoke 33 is integrated with resin together with a metal plate 35 when a magnet holder 34 is formed. The material of the magnet holder 34 is a PPS material having excellent slidability and wear resistance.

The magnet 32, metallic yoke 33, magnet holder 34, and metal plate 35 which are integrated are fastened to the top of the output shaft 40 with screws 37 to 39. Further, in consideration of the workability, the screws 37 to 39 are structured so as to fasten from the underneath of the wheel gear 36, that is, the opposite side of the magnet 32. The output shaft 40 to which the magnet holder 34 is fixed is fit to the gear body 45 via a collar 51 and the 0-ring 31. The collar 51 assists sliding of the output shaft 40 and the O-ring improves the air tightness.

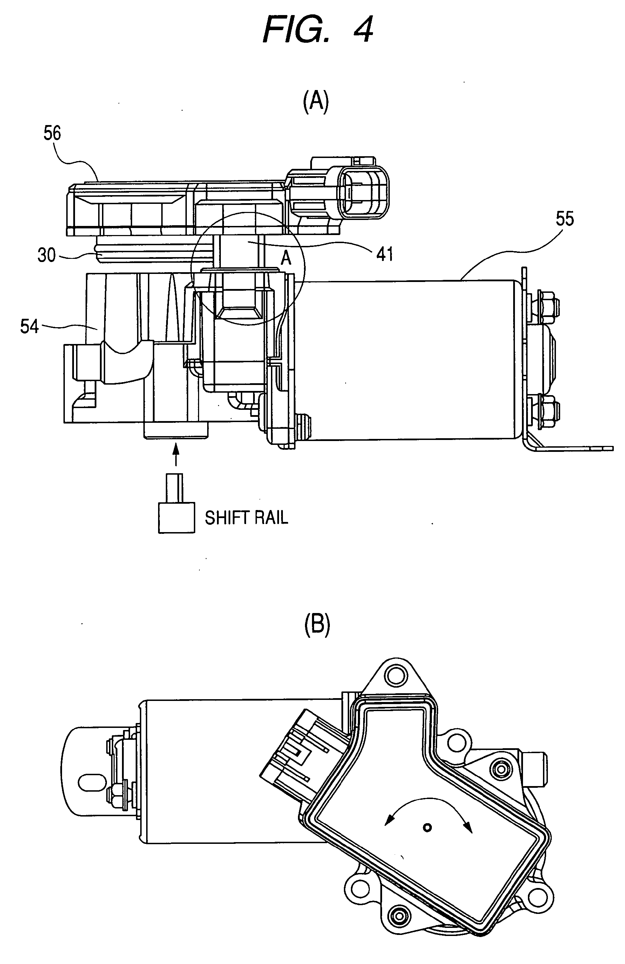

By referring to Fig. 4, the situation of the joint of the ECU storage section 56 and gear storage section 54 is found clear. As shown in Fig. 4(A), it is structured such that prior to the substrate base 30, the motor-connection connector 41 is fit to the gear storage section (refer to the portion A shown in Fig. 4A). Therefore, an operator, after confirming that the motor-connection connector 41 is fit to the gear storage section 54, can mount the ECU storage section 56 on the gear storage section 54.

Further, as shown in Fig. 4(B), when mounting the ECU storage section, prior to the substrate base 30, the motor-connection connector 41 is fit to the gear storage section 54, so that the angular variation of the rotational direction (the direction of the arrow shown in the drawing) of the ECU storage section 56 can be suppressed. This is realized when the bottom of the motor-connection connector 41 is compared with the bottom of the substrate base 30 and the bottom of the motor-connection connector 41 is positioned lower.

In the shift controller, the gear mechanism uses a worm gear, thus depending on the rotational direction of the worm gear, the output shaft 40 moves in the axial direction.

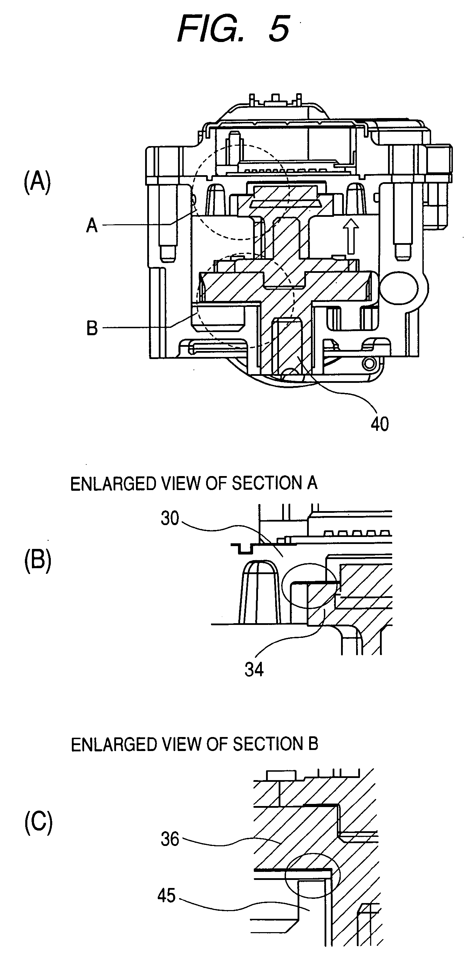

Fig. 5, when the output shaft 40 moves toward the circuit substrate (upward), shows the movement of the output shaft 40 in the axial direction and the portion for receiving it. Fig. 5(B) shows a structure that although the output shaft moves upward, the magnet holder 34 touches the convexity of the lower part of the substrate base 30, thus the upward movement of the output shaft is suppressed. On the other hand, Fig. 5C shows that the bottom of the wheel gear 36 is not in contact with the gear body 45.

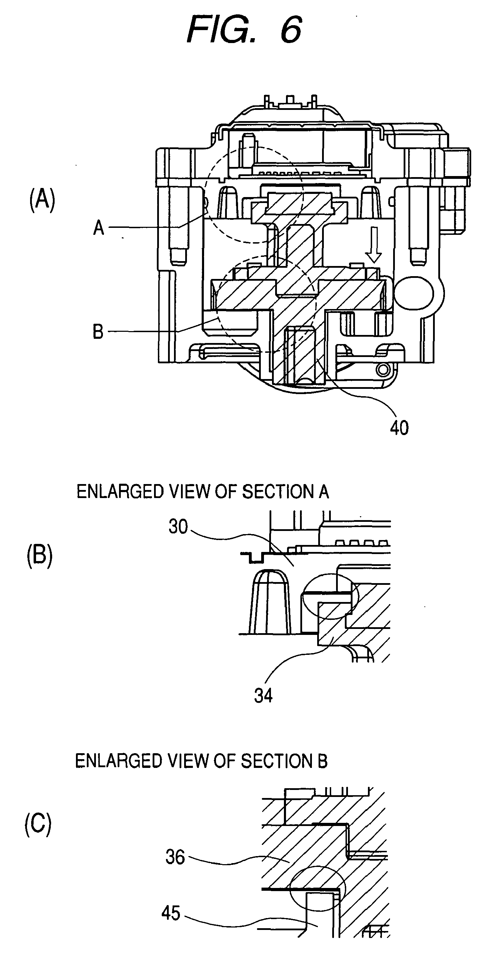

Fig. 6 shows the situation when the output shaft moves on the opposite side (downward) of the circuit substrate. Fig. 6(B) shows that the output shaft moves downward, so that a gap is generated between the magnet holder 34 and the convexity of the lower part of the substrate base 30, thus they are not in contact with each other. On the other hand, Fig. 6(C) shows a structure that the bottom of the wheel gear 36 formed on the output shaft 40 makes contact with the gear body 45, thereby suppresses the output shaft 40 from downward movement.

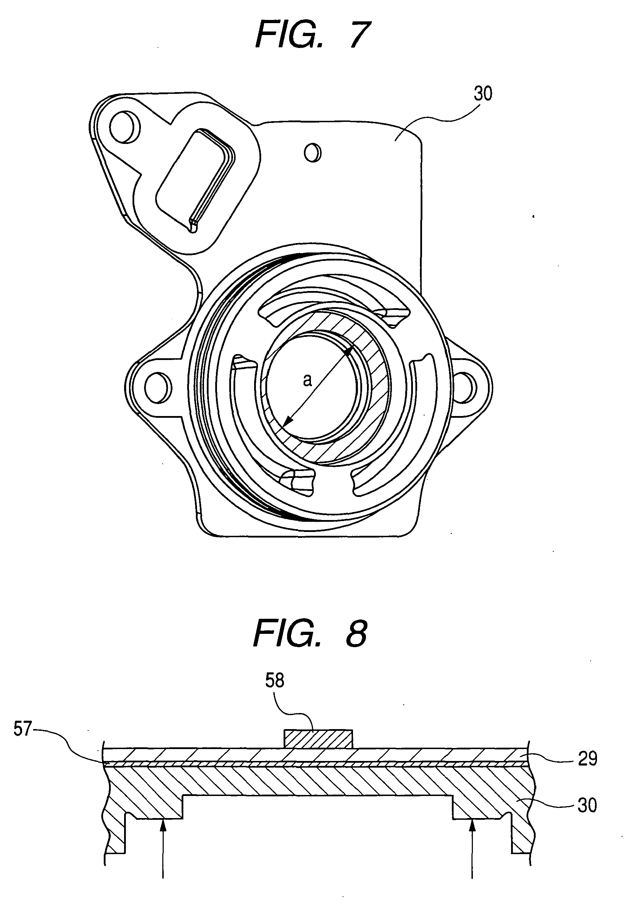

Fig. 7 shows a perspective view of the back of the substrate base 30. On the back of the substrate base 30, a large hand-reeling hole is formed and around the hand-reeling hole, a circular and stand-shaped support (the hatched part shown in Fig. 7) is formed in a ring shape. The support is used to suppress the movement of the magnet holder 34 in the axial direction and at the time of rotation of the magnet holder, provide a contact surface for ensuring the slidability of the magnet holder. Further, the support is positioned on the outer peripheral part of the magnet 32, so that the contact area with the magnet holder 34 can be spread, and the stress concentration in the axial direction which is caused by the contact with the magnet holder 34 is specified so as to be released. This embodiment provides a structure that the inside diameter of the support is specified as a = 24.6 ± 0.1 mm and is longer than the diameter 20 mm of the magnet.

Fig. 8 is a cross sectional view of the ECU assembly. As shown in Fig. 8, the circuit substrate is mounted on the substrate base 30 via the adhesive 57. Further, on the substrate base 30, the stand-shaped magnet holder support is formed in a ring shape and at the central position thereof, the sensor element 58 is mounted on the circuit substrate 29 by soldering. The members positioned between the sensor element 58 and the magnet 32 are the circuit substrate 29, adhesive 57, and substrate base 30, though in consideration of the effect on the magnetic force, non-magnetic materials are adopted.

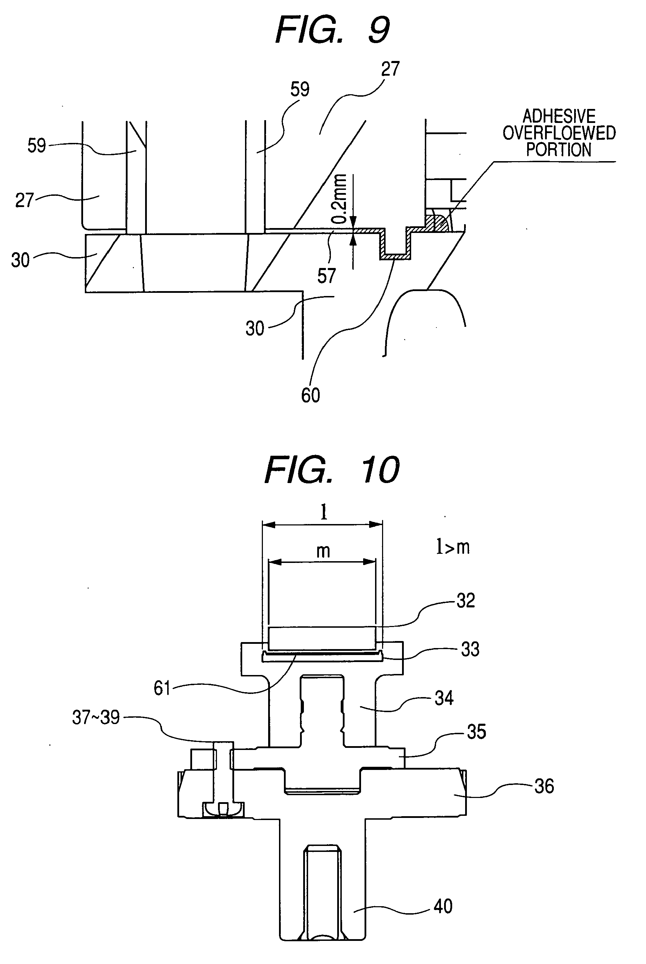

Fig. 9 is a cross sectional view of the insertion section of a bush 59 of the ECU assembly. The insertion section is structured so that the bottom of the bush 59 is projected downward from the bottom of the substrate case 27 by 0.2 mm and with the substrate base 30, instead of the substrate case 27, the bottom of the bush 59 makes contact. By use of this structure, between the substrate case 27 and the substrate base 30, a gap of 0.2 mm is generated, thus a space where the silicon adhesive 57 is filled up is formed. The adhesion of the silicon adhesive 57 affects the sealability of the ECU assembly, though according to this embodiment, the thickness of the silicon adhesive 57 can be controlled uniform and the stability of adhesion can be obtained.

Further, as shown in Fig. 9, the adhesive 57 is coated so that the overflowed portion thereof is the substrate side of the ECU, so that the overflowed amount of the adhesive outside the ECU is suppressed, thus from the appearance, beautiful finishing is realized. This coating method, when coating the adhesive 57 on an external mechanism 60 of the substrate base, can be realized by coating the adhesive 57 on the circuit side of the external mechanism 60 more than the outside side.

Fig. 10 shows a cross sectional view of the output shaft 40 and magnet holder 34. In the magnet holder 34 in which the magnet 32 is joined to the metallic yoke 33 with an adhesive and then is integrated with the magnet holder 34 by resin formation, it is found that a diameter 1 of the yoke 33 is formed larger than the diameter m of the magnet 32. Further, on the surface of the yoke 33 in contact with the magnet 32, a bank is formed on the outer peripheral part of the yoke 33. The advantages of this structure will be cited below.

1. The magnet 32 is prevented from coming out.
2. The magnet 32 can be easily centered to the yoke 33.
3. The overflowed amount of an adhesive 61 can be controlled easily.
4. Resin can be prevented from insertion at the time of unification.

The item 4 aforementioned is realized when the adhesive is overflowed on the boundary surface between the magnet and the yoke, thus the resin does not make contact with the boundary surface.

Furthermore, screws are used to fasten the output shaft 40 to the magnet holder 34, and when inserting the screws 37 to 39 from the magnet holder side, the screwing jib interferes with the outer peripheral part of the magnet holder, though by use of a structure of inserting the screws 37 to 39 from the side of the output shaft 40, regardless of the diameters of the magnet 32 and magnet holder 34, the concerned units can be screwed.

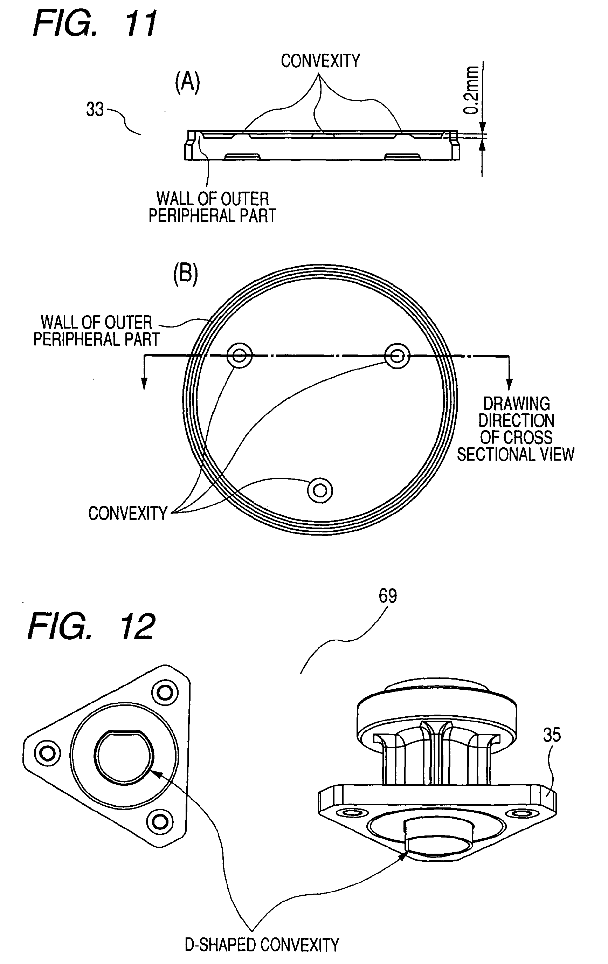

Figs. 11A and 11B show a side cross sectional view and a front view of the yoke 33. Figs. 11A and 11B show that on the side of the yoke 33 in contact with the magnet 32, convexities are formed at three locations. The convexities are 0.2 mm in height, and the magnet is adhered by keeping it fixed to the convexities, so that the thickness of the adhesive 61 can be set to the height of the convexities. The height of the convexities must be set as long as the magnetic force of the magnet 32 is not decreased and in this embodiment, it is set at 0.2 mm.

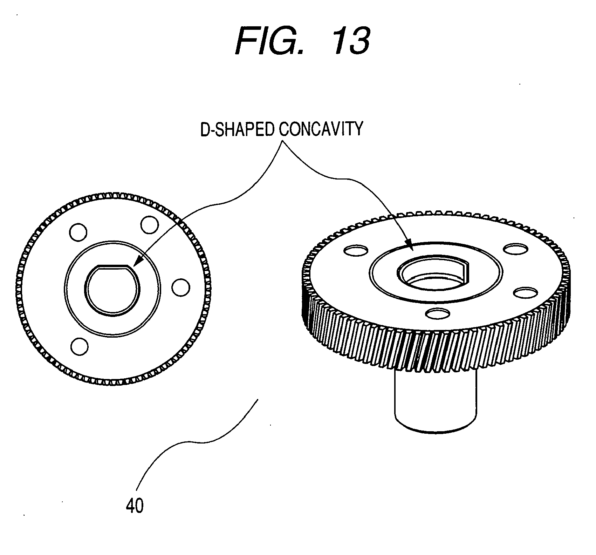

Figs. 12 and 13 show respectively a top view and a perspective view of the magnetic holder assembly 69 and output shaft 40. The output shaft 40 and the metal plate 35 of the magnet holder assembly 69 are fit to each other, though the fitting part thereof is composed of a D-shaped concavity and a D-shaped convexity, thus the positioning of the rotational direction of the magnet to the output shaft is realized.

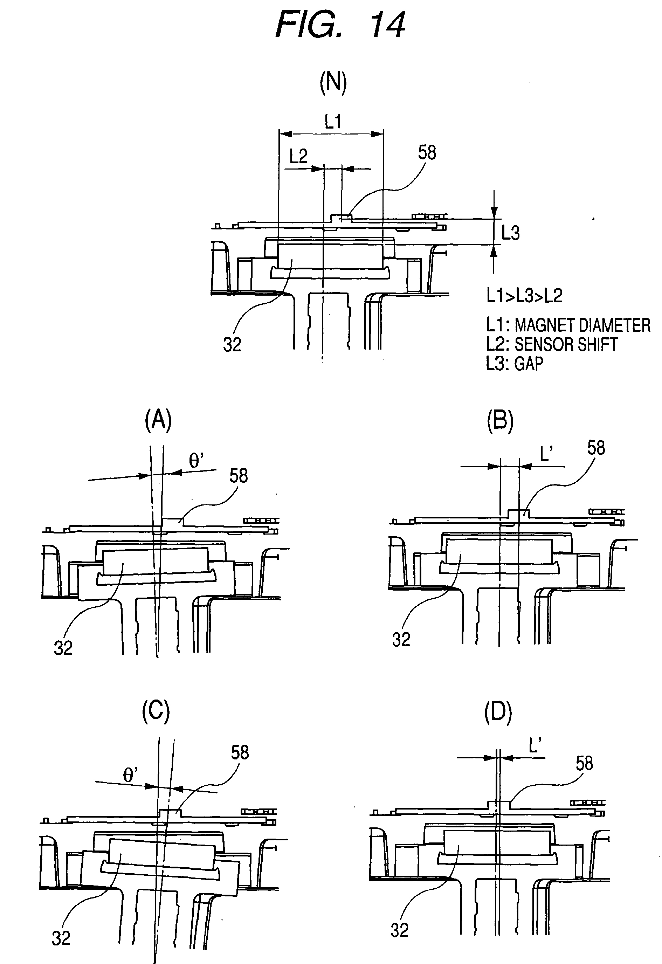

Fig. 14 shows a shift of the magnet 32 to the position of the sensor 58 when the output shaft rotates in the forward direction or backward direction.

In Fig. 14(N), (A)-(D), a symbol L1 indicates a diameter of the magnet 32, L2 a position variation of the sensor 58 to the central axis of the magnet 32, and L3 a distance between the sensor element 58 and the magnet 32. Further, L2 indicates a variation after assembly of the shift controller 22. As factors causing the variation, the inclination of the shaft in correspondence with the rotary motion of the output shaft 40, the horizontal vibration of the shaft, or the thermal expansion or thermal deformation of each member may be considered.

In this embodiment, the gear mechanism uses the worm gear 53 and it is structured so that depending on the rotational direction of the worm gear, the wheel gear 36 is pressed in the axial direction of the worm gear 53, thus the position of the magnet 32 is changed. The variation situation is influenced by the gear meshing and the tooth angle of the worm gear. For example, at the time of forward rotation of the output shaft, the magnet is inclined at an angle of θ in the counterclockwise direction (refer to Fig. 14(A)) and at the time of backward rotation of the output shaft, the magnet is inclined at an angle of θ in the clockwise direction (refer to Fig. 14(C)). Further, Fig. 14(B) shows a case that at the time of forward rotation of the output shaft, the magnet executes a parallel movement to the left and Fig. 14(D) shows a case that at the time of backward rotation of the output shaft, the magnet executes a parallel movement to the right. The cases are drawn by simplifying the actual motion and the actual motion of the magnet is a one in which the statuses shown in Fig. 14(A) to 14(D) are combined.

In either of the cases, the distance (= L3, hereinafter, referred to as an "air gap") between the sensor and the magnet is set longer than the position variation (= L2) between the sensor and the magnet, and the diameter (= L1) of the magnet is set longer than the air gap, thus the influence of the position variation between the sensor and the magnet on the angular deviation can be suppressed.

In the structure of this embodiment, in consideration of the inter-member gap and material characteristics, the shaft inclination is calculated as 2.32° at its maximum and the horizontal vibration is calculated as 2.0 mm at its maximum. The variations due to heat are 0.03° and 0.09 mm at the maximum, and the variations due to wear of the members are 0.42° and 0.46 mm at the maximum, and including these values, the shaft inclination in the worst case is calculated as 2.74° at its maximum, and the horizontal vibration in the worst case is calculated as 2.46 mm at its maximum. On the other hand, in the initial condition after calibration, the shaft inclination is 0.42° at its maximum, and the horizontal vibration is 0.51 mm at its maximum, and in the worst case, they are calculated respectively as 0.84° and 0.97 mm at the maximum.

This embodiment is structured so that by the calibration which will be described later, immediately after assembly of the shift controller 22, the sensor output is stored in the memory on the circuit substrate, and the error at the time of assembly is canceled, though the influence by L2 aforementioned appears as an angular deviation.

To suppress the influence on the angular deviation of L2, this embodiment is structured so as to make L3 longer than L2 and furthermore, make the diameter L1 of the magnet longer than L3. By doing this, even if the sensor is moved after calibration, the robust property of the sensor precision to the sensor shift is improved and the angle can be detected with high precision. However, in the sensor output, due to the influence of the sensor shift in correspondence to the rotational direction of the output shaft, hysteresis of about $\pm 2°$ converted to angle appears.

This embodiment indicates an angle calculation method for reducing the hysteresis and furthermore suppressing the influence of temperature and gap changes and hereinafter, the angle calculation method for angle detection will be explained.

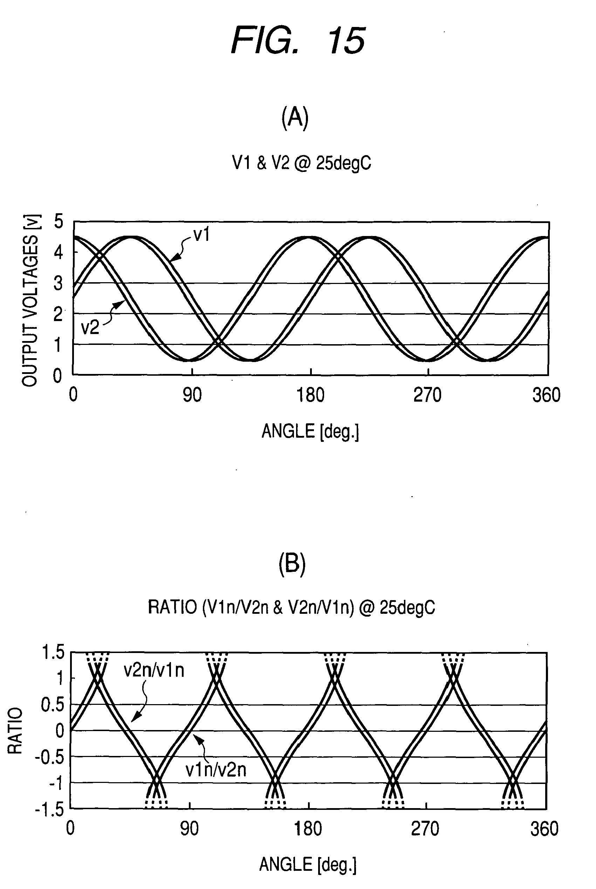

Fig. 15(A) shows the sensor output at 25°C. The magnetic sensor 58 adopted in this embodiment is composed of two systems of magnetic circuits, which output two sine wave waveforms (V1, V2) at phases shifted by 45°. As mentioned above, at the time of forward rotation and backward rotation of the output shaft, the magnet is moved and hysteresis appears in the sensor output.

Fig. 15(B) shows the ratio obtained by calculation from V1 and V2. The ratio is derived from the formulas indicated below.

$$\text{Formula 1} \quad V1n/V2n = (V1\_normalized)/(V2\_normalized)$$

where:

$$\text{Formula 2} \quad V1\_normalized = (V1 - V1\_offset)$$

and

$$\text{Formula 3} \quad V1\_offset = (V1\_max + V1\_min)/2.$$

In this case, V1_max and V1_min indicate respectively the maximum value and minimum value of the sensor output V1.

Similarly:

$$\text{Formula 4} \quad V2n/V1n = (V2\_normalized)/(V1\_normalized)$$

where:

$$\text{Formula 5} \quad V2\_normalized = (V2 - V2\_offset)$$

and

$$\text{Formula 6} \quad V2\_offset = (V2\_max + V2\_min)/2.$$

In this case, V2_max and V2_mln indicate respectively the maximum value and minimum value of the sensor output V2.

Hysteresis is seen in the sensor output V1 and V2, so that also in V1n and V2n, hysteresis is seen.

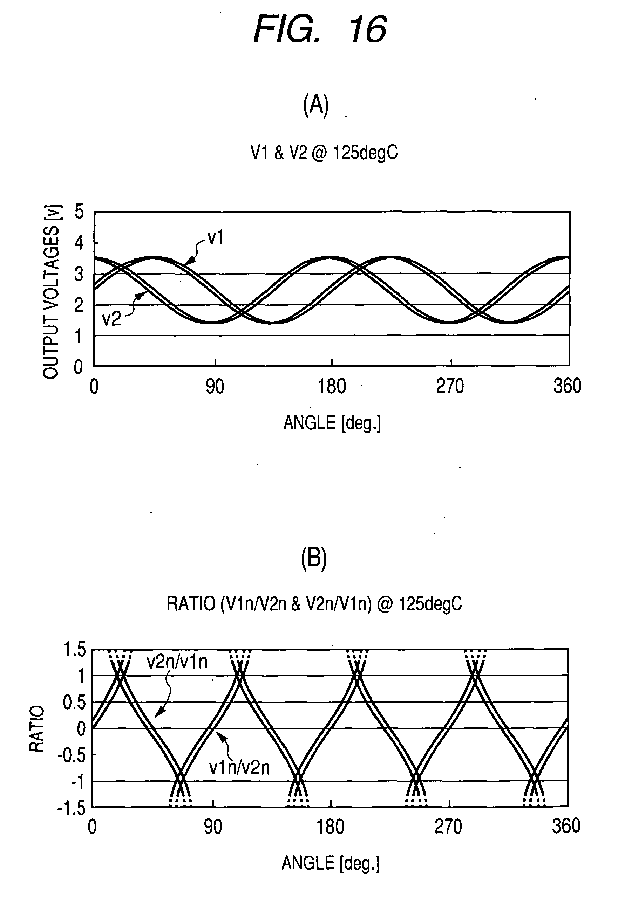

Fig. 16 shows the sensor waveform at 125°C. As the temperature rises, the amplitude of the waveform is reduced. The reason is that the reactivity of the magnetic reluctance element to the magnetic field is lowered and the magnetic force of the magnet itself is lowered. Further, the same may be said with the case that the distance (air gap) between the sensor and the magnet is extended.

By comparison of Fig. 15(B) with Fig. 16(B), it is found that there is no change in the ratio. In Formulas (1) and (4), the mutual ratios of the output signals are taken, thus the influence of change in the amplitude is canceled.

This method is effective in the MR sensor and GMR sensor in which the amplitude synchronism is guaranteed. For example, in KMZ43 manufactured by Philips, the amplitude synchronism is guaranteed as:

```
Amplitude synchronism 100 ± 0.5 [%]
```

and the temperature characteristic thereof is guaranteed as:

```
Temperature coefficient of amplitude synchronism 0
± 0.01 [%/k].
```

In this embodiment, function information that the ratio is measured after the shift controller is assembled and the waveform thereof is described is stored beforehand in the EEPROM in the circuit substrate.

Hereinafter, the calibration procedure will be indicated.

1. The shift controller 22, after assembled, is mounted on the calibration stand. In the calibration stand, an encoder for providing absolute angle information of the output shaft 40 and a computer for executing communication with the shift controller 22 and the signal processing are incorporated.

2. The computer transmits a forward rotation instruction to the shift controller 22 via CAN communication. The shift controller 22, on the basis of the instruction, drives the motor in the shift controller 22 in the forward direction and simultaneously transmits the sensor output signals V1 and V2 to the computer via CAN communication.

3. After the output shaft moves in a predetermined angle region, the computer transmits a backward rotation instruction to the shift controller via CAN communication. The shift controller, on the basis of the instruction, drives the motor in the shift controller in the backward direction and simultaneously transmits the sensor output signals V1 and V2 to the computer via CAN communication.

4. The computer, on the basis of the output signal of the encoder and the sensor signals V1 and V2, calculates the following information.

    Maximum voltage (V1_max) of V1
    Minimum voltage (V1_min) of V1
    Maximum voltage (V2_max) of V2
    Minimum voltage (V2_min) of V2

5. The computer calculates a normalized sensor signal. The calculation formulas are Formulas 2 and 5.

6. The computer calculates the ratios from the normalized signal. The calculation formulas are Formulas 1 and 4.

7. The computer divides the angle region into 16 parts from the normalized signal and ratios. The conditions used for division are indicated in the following table.

[Table 1]

| Angle | V1_norma lized | V2_norma lized | V1V2 | V2V1 | Ratio | Angle region No. |
|---|---|---|---|---|---|---|
| -5.0 < Angle < 50.0 | < 0 | × | × | 0 < = V2V1 < = 1 | V2V1 | 1 |
|  |  |  |  | -1 < = V2V1 < 0 |  | 2 |
| 40.0 < Angle 95.0 | × | > 0 | 0 < = V1V2 < = 1 | × | V1V2 | 3 |
|  |  |  | -1 < = V1V2 < 0 |  |  | 4 |
| 85.0 < Angle < 140.0 | > 0 | × | × | 0 < = V2V1 < = 1 | V2V1 | 5 |
|  |  |  |  | -1 < = V2V1 < 0 |  | 6 |
| 130.0 < Angle < 185.0 | × | < 0 | 0 < = V1V2 < = 1 | × | V1V2 | 7 |
|  |  |  | -1 < = V1V2 < 0 |  |  | 8 |

(continued)

| Angle | V1_norma lized | V2_norma lized | V1V2 | V2V1 | Ratio | Angle region No. |
|---|---|---|---|---|---|---|
| 175.0 < Angle < 230.0 | < 0 | × | × | 0 < = V2V1 < = 1 | V2V1 | 9 |
| | | | | -1 < = V2V1 < 0 | | 10 |
| 220.0 < Angle < 275.0 | × | > 0 | 0 < V1V2 < = 1 | × | V1V2 | 11 |
| | | | -1 < = V1V2 < 0 | | | 12 |
| 265.0 < Angle < 320.0 | > 0 | × | × | 0 < = V2V1 < = 1 | V2V1 | 13 |
| | | | | -1 < = V2V1 < 0 | | 14 |
| 310.0 < Angle < 365 | × | < 0 | 0 < = V1V2 < = 1 | × | V1V2 | 15 |
| | | | -1 < = V1V2 < 0 | | | 16 |

Here, for example, when the angle obtained from the encoder is 20°, and V1_normalized is -1 [V], and V2/V1 is 0.1, the angle region is defined as 1.

This embodiment uses the MR element and during one rotation of the output shaft, a sine wave with two cycles is generated. For example, in the case of the angle region Nos. 1 and 9, only for the sensor output, the region division condition is the same and the angle region cannot be recognized. Therefore, at the time of calibration, the angle region is decided using the encoder information.

8. The computer approximates the ratio corresponding to each of the divided angle regions to a cubic function. Concretely, it obtains coefficients ($\alpha$, $\beta$, $\gamma$, $\delta$) of the cubic function having a minimum of E indicated below in each angle region. For example, in the angle region 1, it substitutes V2/V1 for the ratio.

$$\text{Formula 10} \quad E = \sum \{\theta - (\alpha \times (Ratio^3) + \beta \times (Ratio^2) + \gamma \times (Ratio) + \delta)\}$$

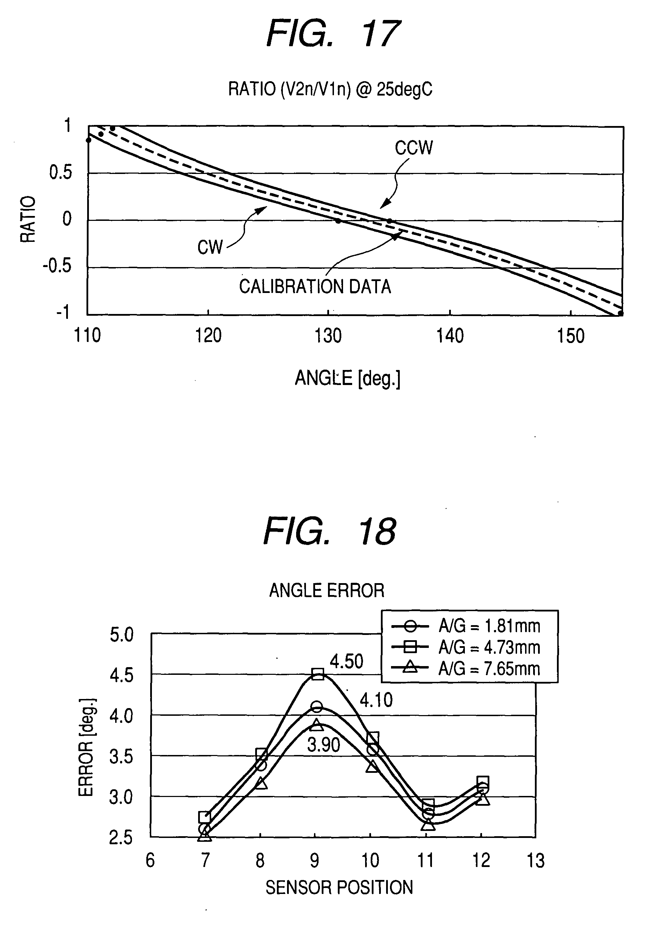

When measuring the waveform, the forward rotation and backward rotation must be executed surely and as shown in Fig. 17, so as to halve the hysteresis generated by the forward rotation and backward rotation, the computer obtains a function for describing the waveform at the center of each signal. Concretely, Formula 10 is replaced with Formula 11 for calculation.

$$\text{Formula 11} \quad E = \sum \{\theta_{CW} - (\alpha \times (Ratio_{CW}^3) + \beta \times (Ratio_{CW}^2) + \gamma \times (Ratio_{CW}) + \beta)\} + \sum \{\theta_{CCW} - (a \times (Ratio_{CCW}^3) + \beta \times (Ratio_{CCW}^2) + \gamma \times (Ratio_{CCW}) + \delta)\}$$

where $\theta_{CW}$: encoder output signal during forward rotation of the output shaft,
$\theta_{CCW}$: encoder output signal during backward rotation of the output shaft,
$Ratio_{CW}$: ratio during forward rotation of the output shaft, and
$Ratio_{CCW}$: ratio during backward rotation of the output shaft.

The waveform may be stored respectively for the forward rotation and backward rotation, though in this embodiment, to suppress the storing capacity, a set of $\alpha$, $\beta$, $\gamma$, and $\delta$ is calculated from the signals at the time of forward rotation and backward rotation.

9. The coefficients $\alpha$, $\beta$, $\gamma$, and $\delta$ in the respective angle regions calculated by the computer are transferred to the shift module via CAN communication and are stored at a predetermined address of the EEPROM on the circuit substrate.

By the aforementioned method, the influence due to the individual difference in the sensor shift which is easily caused during assembly can be canceled and the angle can be detected with high precision.

Fig. 18 shows the influence due to the shift after assembly when the angle is calculated by the aforementioned method. In Fig. 18, the numerals in the horizontal axis indicate measuring points (given in Table 1) expressing the shift amount and the vertical axis indicates the angle deviation. Further, the X-Y coordinates indicating the shift at each of the measuring points are given in Table 1. In Table 1, X and Y indicate a coordinate system and the center of the output shaft is defined as an origin. In the calculation shown in Fig. 18, the magnet diameter is constant such as 20 mm, though as the air gap is extended, the sensor precision is improved. Namely, it is found that the robust property for the position variation is improved.

However, if the air gap is extended, the magnetic force at the position of the sensor element is lowered below the saturation magnetic field of the sensor element, and the orientation property of magnetic powder in the MR sensor is disordered, thus desired output cannot be obtained. The air gap is set in the region where the magnetic force can be increased to the saturation magnetic field of the magnetic sensor element or higher so as to ensure the maximum gap.

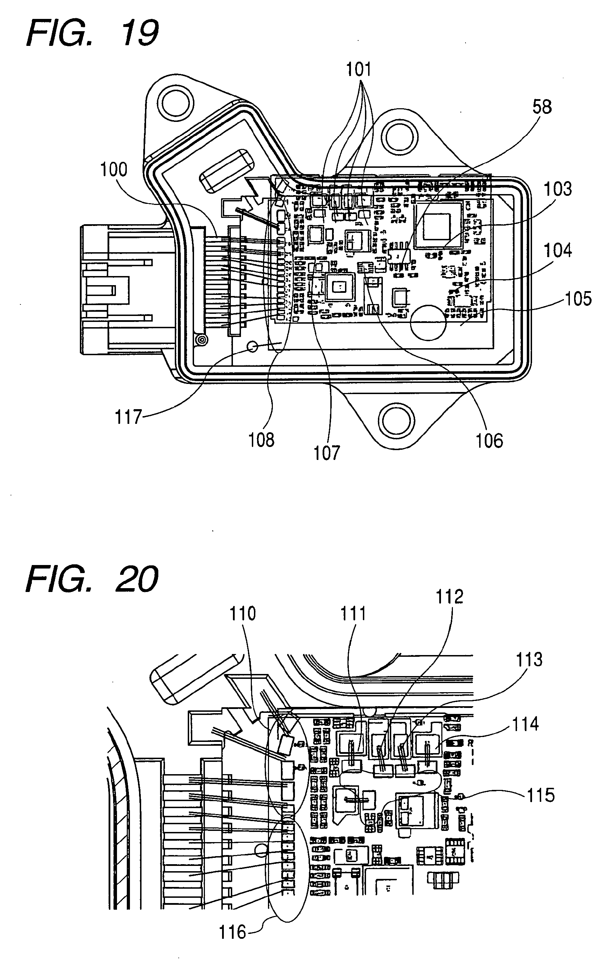

Fig. 19 shows the circuit substrate in which the sensor element is mounted and the inner connection of the ECU. On the circuit substrate, as a large current element, a motor driver 101, a coil driving driver 106, and a transistor for protection of battery reverse connection 107 are mounted on the substrate in a bare chip form by soldering or with a conductive adhesive, and furthermore, as a signal system element, a microcontroller 103, the sensor element 58, a nonvolatile memory 104, and an operational amplifier 105 are mounted on the substrate by soldering in a molded package state. From the arrangement of the large current element and signal system element, it is found that the large current element is arranged close to a connector fastening portion 100 on the circuit substrate 29. Therefore, from the influence of the voltage drop due to flowing of a large current through the circuit pattern and electromagnetic noise generated when the large current is switched to on or off, the operation of the signal system requiring precision can be protected.

Further, as shown in Fig. 19, a circular projection 117 is formed on the substrate base and electric connection is realized by the pad and aluminum wire on the circuit substrate. The projection is connected to the case earth of a car via the transfer case and fulfills a function as a countermeasure for anti-electrostatic noise and anti-electromagnetic wave noise. Regarding the surface of the projection, to increase the junction property of bonding, the surface roughness is specified to be 3 $\mu$m or smaller. The surface of the projection is finished to a mirror surface status, for example, by machining or varnishing. The projection is a part different from the substrate base and is fixed and formed, for example, by press-fitting or calking a pin into the hole formed in the substrate base.

Fig. 20 is an enlarged view of a part of Fig. 19 and shows that to connect the substrate case to the circuit substrate or the bare chip mounted on the circuit substrate to the circuit substrate, wire bonding is used. As a material of wire bonding, aluminum, gold, or copper may be considered, though in this embodiment, the bonding wire through which a large current flows is made of aluminum and together with the wire to connect the signal system, gold is used. Further, by referring to Fig. 20, it is found that two kinds of shapes are used simultaneously for the pat of the bonding wire. For the pat for a large current, pats 110 and 115 of a size of 1.65 mm x 2.65 mm are used and for the pat of the signal system, a pat 116 of a size of 1.65 mm x 0.85 mm is used. In this embodiment, when the motor is installed, a current of about 20 A flows, so that for a pat for a large current, it is specified to use three aluminum wires with a diameter of 300 $\mu$m for bonding. As a pat material, in consideration of the coefficient of linear expansion of the ceramics substrate, a nickel alloy composed of 42Ni-F is adopted.

Furthermore, as shown in Fig. 20, as an FET for driving the motor, a transistor T5 (111), a transistor T4 (112), a transistor T2 (113), and a transistor T3 (114) are sequentially mounted and arranged. At the time of forward rotation of the motor, T5 and T2 are conducted and at the time of backward rotation of the motor, T4 and T3 are conducted. When the motor makes the forward or backward rotation, to prevent any two neighboring FETs from being conducted simultaneously, the arrangement of the motor driving FETs is decided. Therefore, the heat source is distributed, thus the apparatus is structured so as to suppress heat generation of each motor driving FET due to heat given from another motor driving FET.

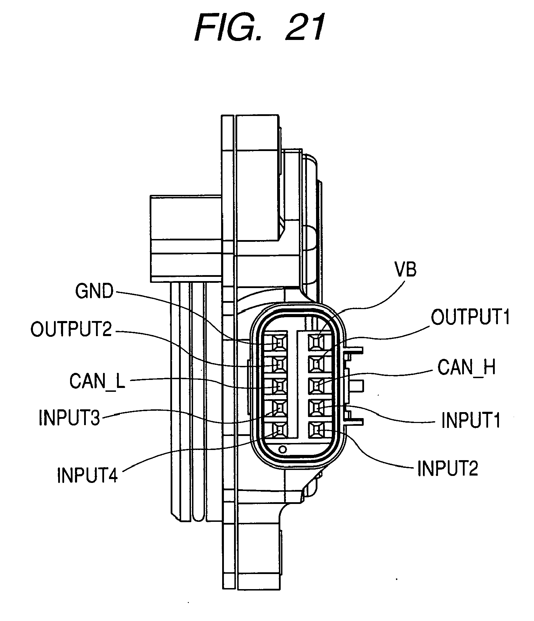

Fig. 21 shows a side view of the ECU assembly viewed from the connector side. As shown in Fig. 21, on the connector, 10 terminals are formed. Further, in the arrangement of 10 terminals, 5 rows of terminals are arranged in parallel with the circuit substrate surface and 2 columns of terminals are arranged perpendicularly to the circuit substrate. When 10 terminals are arranged in one row, the size of the connector in the longitudinal direction is increased, and the shape of the copper wiring is complicated, and additionally, the external form of the ECU assembly is also increased. Further, when 3 columns of terminals are arranged perpendicularly to the path substrate, the height of the ECU assembly is increased and when the shift controller is mounted in a car, there is a fear of physical interference with an external member.

This embodiment adopts an arrangement of 5 rows x 2 columns, thus the external size of the connector is designed in its minimum and in an optimum shape. Further, the connector, to prevent water from entering from the outside, is fit to the opposite connector, thus a waterproof specification is adopted. As an example of the connector under the concerned waterproof specification, GT150 series by Delphi Packard Electric Systems, Ltd. may be sited. Further, through the connector terminal, a current of about 20 A flows when the motor is locked, though to prevent heat generation due to it, the terminals are selected so as to control the contact resistance between the terminals to 20 m$\Omega$.

In this embodiment, the plate thickness of the terminals is set at 0.8 mm.

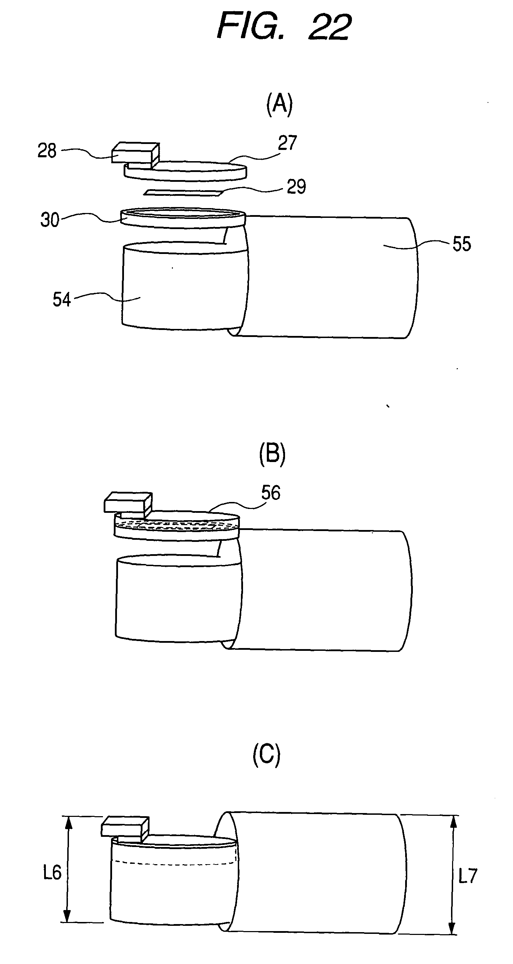

To make the shift controller 22 more compact, as shown in Fig. 22, the ECU assembly is contained completely in the gear storage section. In the substrate size shown in Fig. 19, the external size of the ECU becomes larger than the gear storage section, though by adoption of a low-temperature calcined ceramic multi-layer substrate (LTCC) for the circuit substrate 30, the substrate size can be made smaller. On the LTCC, a resistor by printing and a capacitor in the substrate can be formed, so that it is known that as compared with the conventional method, the substrate can be reduced to about a half area. In correspondence with the reduction of the substrate size, the substrate base 30 and substrate case 27 can be also reduced in size. In this way, a specification that the ECU section 56 is contained in the gear body 54 is obtained and a structure that the total height L6 of the ECU and gear body is lower than the height L7 of the motor can be realized.

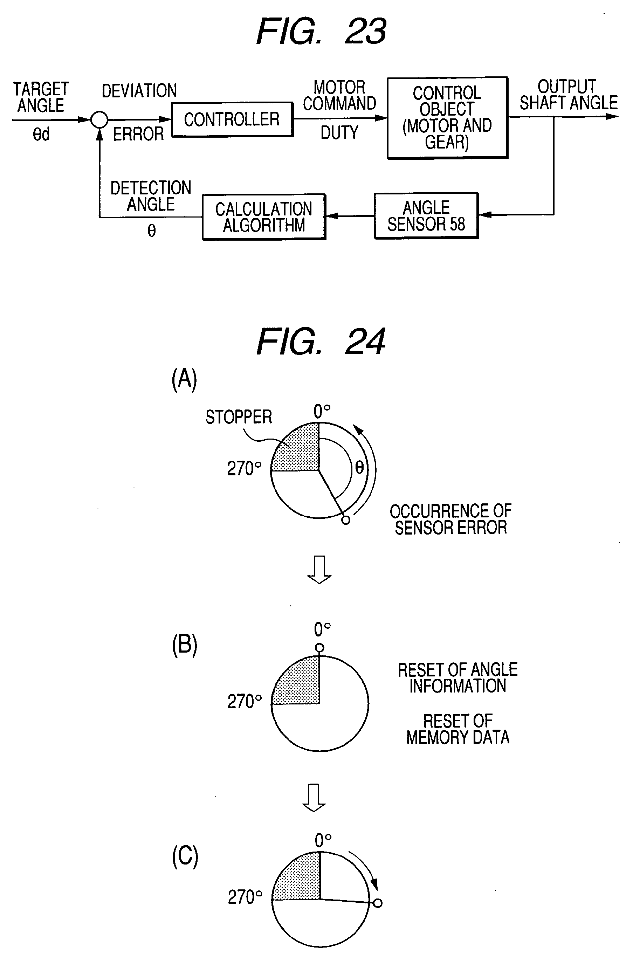

Fig. 23 shows a control block diagram of the shift controller 22. The controller which is programmed beforehand in the micro-controller, on the basis of a signal of the mode select switch 23, calculates a motor driving motor command. The motor command varies with the mechanical and electrical characteristics of the motor to be controlled, though there are PWN control for switching on and off in an earlier cycle than the electric time constant of the motor and on-off control for not switching on and off during rotation of the motor but turning off when the output shaft reaches a predetermined angle. The on-off control, to suppress overshooting due to the inertia of the motor when it is stopped, simultaneously turns on only T2 and T4 or simultaneously turns on only T3 and T5. Further, the PWM control, to moderate the mechanical shock at the start time of rotation of the motor, can adjust the duty ratio (the ratio of the on time to the switching cycle) of the PWM. On the basis of the motor command, the motor to be controlled and output shaft rotate, though the rotational angle θ thereof is calculated by the software algorithm of the micro-controller on the basis of the sensor output voltage.

The concerned application aims at the unit for switching the drive status of a car and fail safe when a failure occurs is important. Fig. 24 shows the operation of the shift controller 22 when the sensor algorithm detects an error. As shown in Fig. 24A, when an error occurs during the operation or during stopping, for example, the case that the angle region information is lost and the case that erasure or incorrect overwriting of the calibration data occurs will be considered. The shift controller 22 has a stopper for restricting the rotation of the output shaft for the purpose of protecting the transfer case. When an error is detected by the software, the motor is rotated for a predetermined period of time in a predetermined direction (the direction of the arrow shown in Fig. 24A) and the motor is hit on the stopper and stopped. At this point of time, the output shaft is stopped at an angel decided uniquely by the stopper and the angle is a known angle. Therefore, area information is updated to a known value or the initial value, thus the unit can be retuned from the error status. Further, the backup data of the calibration data stored in another area of the EEPROM can be copied and the unit can be returned from the error status.

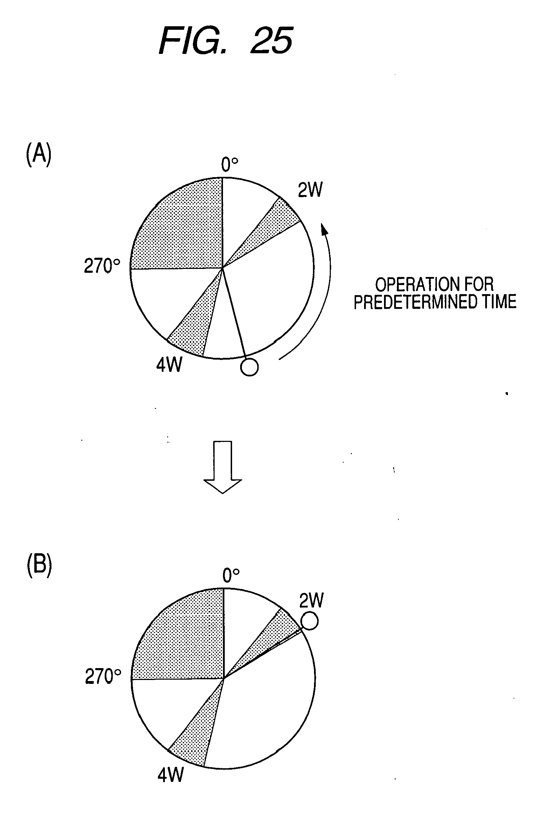

Further, as shown in Fig. 25, during the ordinary operation in which no error is detected, the arrival time until the target angle of the output shaft is learned and when an error is detected in the sensor output, the motor can be controlled on the basis of the learned value.

The present invention is applied to the shift controller of a car, though it can be used also to other various kinds of rotational position sensors.

The above features and embodiments can be combined in any way partly or as a whole.

## Claims

1.  A controller for switching a driving status of a car comprising:

    a motor (22) for driving a shift rail (13) of a transfer case (4), a gear mechanism for transferring a rotation of said motor (22) to said shift rail (13),
    a magnet (32) rotating together with said shift rail, and
    a magnetic sensor element (58) for proving output according to a rotational angle of said magnet (32),
    wherein a distance between said magnet (32) and said magnetic sensor element (58) is longer than a position variance of said magnetic sensor (58).

2.  The controller for switching a driving status of a car according to Claim 1, wherein said distance between said magnet (32) and said magnetic sensor element (58) is smaller than a diameter of said magnet (32).

3.  The controller for switching a driving status of a car according to Claim 1 or 2, wherein a movement of said gear mechanism in an axial direction is received by an outside of said magnet (32).

4.  A controller for switching a driving status of a car comprising:

a motor (22) for driving a shift rail (13) of a transfer case (4), a gear mechanism for transferring a rotation of said motor (22) to said shift rail (13), a magnet (32) for rotating together with said shift rail (13), a magnetic sensor element (58) for proving output

according to a rotational angle of said magnet (32), and a signal processing mechanism for detecting a rotational angle of said shift rail (13) from output of said magnetic sensor element (58),

wherein for said signal processing function, a ratio metric method for obtaining a ratio from a sensor signal obtained by normalizing a signal from said magnetic sensor element (58) is used.

5. The controller for switching a driving status of a car according to Claim 4, wherein function information for expressing said ratio is stored in a nonvolatile memory.

6. The controller for switching a driving status of a car according to any of Claim 1 to 5, further comprising a waterproof circuit storage unit for controlling said motor (22),
wherein a thickness of an adhesive for sealing said circuit storage unit is controlled by a bush (59).

7. The controller for switching a driving status of a car according to Claim 6, wherein said bush (59) is integrated with said circuit storage unit.

8. The controller for switching a driving status of a car according to at least one of Claims 4 to 7, wherein a circuit having said signal processing function can perform a return operation at time of failure.

9. The controller for switching a driving status of a car according to Claim 8, wherein said return operation is realized by updating data of said nonvolatile memory.

10. The controller for switching a driving status of a car according to Claim 8 or 9, wherein said return operation is executed at a known position of said motor (22) .

## FIG. 1

## FIG. 2

SHIFT RAIL

*FIG. 3A*

*FIG. 3B*

# FIG. 4

## (A)

56

30

54

41

A

55

SHIFT RAIL

## (B)

# FIG. 5

(A)

A

B

40

ENLARGED VIEW OF SECTION A

30

(B)

34

ENLARGED VIEW OF SECTION B

(C)

36

45

# FIG. 6

(A)

A

B

40

ENLARGED VIEW OF SECTION A

(B)

30

34

ENLARGED VIEW OF SECTION B

(C)

36

45

# FIG. 7

# FIG. 8

# FIG. 9

59    27

59

27

30

0.2mm

57

30

60

ADHESIVE
OVERFLOEWED
PORTION

# FIG. 10

l

m

l>m

32

33

61

34

37~39

35

36

40

# FIG. 11

CONVEXITY

(A)

33

0.2mm

WALL OF OUTER
PERIPHERAL PART

(B)

WALL OF OUTER
PERIPHERAL PART

DRAWING
DIRECTION
OF CROSS
SECTIONAL VIEW

CONVEXITY

# FIG. 12

69

35

D-SHAPED CONVEXITY

# FIG. 13

D-SHAPED CONCAVITY

40

# FIG. 14

(N)

L1

L2

58

L3

32

L1>L3>L2

L1: MAGNET DIAMETER
L2: SENSOR SHIFT
L3: GAP

(A)

θ'

58

32

(B)

L'

58

32

(C)

θ'

58

32

(D)

L'

58

32

# FIG. 15

## (A)

### V1 & V2 @ 25degC

## (B)

### RATIO (V1n/V2n & V2n/V1n) @ 25degC

# FIG. 16

## (A)

### V1 & V2 @ 125degC

## (B)

### RATIO (V1n/V2n & V2n/V1n) @ 125degC

# FIG. 17

RATIO (V2n/V1n) @ 25degC

# FIG. 18

ANGLE ERROR

# FIG. 19

# FIG. 20

# FIG. 21

# FIG. 22

(A)

(B)

(C)

## FIG. 23

TARGET
ANGLE
θd

DEVIATION

ERROR

CONTROLLER

MOTOR
COMMAND

DUTY

CONTROL
OBJECT
(MOTOR AND
GEAR)

OUTPUT
SHAFT ANGLE

DETECTION
ANGLE
θ

CALCULATION
ALGORITHM

ANGLE
SENSOR 58

## FIG. 24

(A)

STOPPER

0°

θ

270°

OCCURRENCE OF
SENSOR ERROR

(B)

0°

270°

RESET OF ANGLE
INFORMATION

RESET OF
MEMORY DATA

(C)

0°

270°

# FIG. 25

(A)

OPERATION FOR
PREDETERMINED TIME

(B)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001159463 A
- JP 2003525563 A
- WO 2004068679 A
- WO 3799270 A
- JP 2006030217 A
- JP 2004245614 A